# DEMANDE DE BREVET EUROPEEN

(11) **EP 4 464 578 A1**
(43) Date de publication de la demande: **20.11.2024**
(21) Numéro de dépôt: 24176387.9
(22) Date de dépôt: 16.05.2024
(51) Int. Cl.: B62J 1/08, A63B 22/06, F16B 2/14, F16B 7/14

(54) **SYSTÈME DE RÉGLAGE EN HAUTEUR D'UN ACCESSOIRE D'UN APPAREIL SPORTIF**

(30) Priorité: 16.05.2023 FR 2304823
(71) Demandeur: Decathlon, 59650 Villeneuve d'Ascq (FR)
(72) Inventeur: ROUSSEAU, Mathieu, 59650 Villeneuve d'Ascq (FR); BRAULT, Baptiste, 59650 Villeneuve d'Ascq (FR); LEFEVRE, Alain, 59650 Villeneuve d'Ascq (FR)
(74) Mandataire: Sayettat, Julien Christian

(57) **Abrégé**

L'invention concerne un système de réglage en hauteur d'un accessoire d'un appareil sportif, ledit système comprenant ledit accessoire, un tube (10) présentant un conduit (11) et une tige (12) disposée dans ledit conduit, ledit tube étant équipé d'un module (19) de réglage portant une bague (20) pourvue d'un orifice (21) dans lequel la tige (12) est disposée, ladite bague étant montée en basculement dans le module (19) entre une position de coulissement dans laquelle l'orifice (21) est aligné avec la tige (12) et une position de blocage dudit coulissement par inclinaison de ladite bague, ladite position de blocage étant contrainte par un moyen élastique et ladite position de coulissement étant actionnée à l'encontre dudit moyen élastique, l'accessoire étant associé sur le tube (10), la bague (20) étant montée en coulissement sur la tige (12) sur une hauteur de réglage dudit tube le long de la tige (12).

## Description

L'invention concerne un système de réglage en hauteur d'un accessoire d'un appareil sportif, ainsi qu'un appareil sportif comprenant un tel système.

Elle s'applique en particulier au réglage en hauteur d'une selle de vélo d'appartement, dont le cadre est destiné à venir en appui sur le sol, notamment au moyen d'un socle sur lequel sont dressées deux structures portant respectivement une selle et un guidon, un pédalier étant en outre monté sur ledit cadre, par exemple au niveau de la jonction entre les structures de selle et de guidon.

Selon d'autres applications, l'invention concerne d'autres types d'appareils sportifs, notamment de fitness, comprenant notamment un cadre capable de supporter le poids d'un utilisateur, l'accessoire à régler en hauteur pouvant être un guidon, un montant ou tout autres accessoires notamment d'appui de l'utilisateur sur l'appareil.

On connaît des systèmes de réglage en hauteur de selle de vélo qui reposent sur un mécanisme incrémental, par exemple par engagement d'un picot de verrouillage dans sélectivement l'un des orifices répartis verticalement le long d'une tige de selle.

Ces systèmes ne donnent pas entière satisfaction, en ce que les possibilités de réglage en hauteur sont limitées par le nombre d'orifices prévu, ce qui ne permet pas de bénéficier d'un réglage fin de la hauteur de la selle.

Pour pallier ces inconvénients, on connaît des systèmes de réglage continu de la hauteur d'une selle. Le document JP-2001/104514 décrit un tel système dans lequel la tige portant la selle est montée en translation dans un tube qui est équipé d'un module de réglage portant une bague pourvue d'un orifice dans lequel la tige est disposée, ladite bague étant montée en basculement dans le module entre une position de coulissement, dans laquelle l'axe de l'orifice est aligné avec l'axe d'extension de la tige, et une position de blocage dudit coulissement par inclinaison de la bague.

En particulier, la position de blocage est contrainte par un moyen élastique et la position de coulissement est actionnée à l'encontre dudit moyen élastique par un levier monté en rotation sur le tube.

Cet agencement pose problème en termes d'ergonomie, notamment en ce que l'utilisateur doit simultanément actionner le levier qui est fixe en hauteur et saisir la selle pour la déplacer sur sa hauteur de réglage, ce qui nécessite l'usage de ses deux mains.

L'invention vise à perfectionner l'art antérieur en proposant notamment un système qui permet un réglage précis et fiable de la hauteur d'un accessoire d'un appareil sportif, tout en présentant une ergonomie améliorée pour en faciliter la manipulation par l'utilisateur.

A cet effet, selon un premier aspect, l'invention propose un système de réglage en hauteur d'un accessoire d'un appareil sportif, ledit système comprenant ledit accessoire, un tube présentant un conduit et une tige disposée dans ledit conduit, ledit tube étant équipé d'un module de réglage portant une bague pourvue d'un orifice dans lequel la tige est disposée, ladite bague étant montée en basculement dans le module entre une position de coulissement dans laquelle l'axe de l'orifice est aligné avec l'axe d'extension de la tige et une position de blocage dudit coulissement par inclinaison de ladite bague, ladite position de blocage étant contrainte par un moyen élastique et ladite position de coulissement étant actionnée à l'encontre dudit moyen élastique, l'accessoire étant associé sur le tube, la bague étant montée en coulissement sur la tige sur une hauteur de réglage dudit tube le long de la tige.

Selon un second aspect, l'invention propose un appareil sportif, notamment un vélo, comprenant un tel système de réglage en hauteur d'un accessoire, notamment d'une selle, ledit appareil comprenant un cadre équipé d'un fourreau, la tige étant disposée dans ledit fourreau en étant fixée audit cadre et le tube étant monté en coulissement dans ledit fourreau.

D'autres particularités et avantages de l'invention apparaîtront dans la description qui suit, faite en référence aux figures jointes, dans lesquelles :
[Fig.1] représente en vue de côté un vélo d'appartement équipé d'un système de réglage en hauteur de sa selle selon un mode de réalisation de l'invention ;
[Fig.1a] est un agrandissement de la figure 1 centré sur le montage de la selle sur le tube ;
[Fig.2] la figure 2 est une représentation en perspective vue de l'arrière du montage de la selle sur le tube, tel que représenté sur la figure 1a ;
[Fig.3] est une représentation schématique en vue de côté du système de réglage en hauteur du vélo d'appartement des figures précédentes, dans laquelle le tube est représenté partiellement transparent pour rendre visibles la tige et les éléments du module de réglage ;
[Fig.3a] et
[Fig.3b] sont des agrandissements de respectivement la partie supérieure (figure 3a), en légère perspective vue de l'avant, et de la partie inférieure (figure 3b) du système de réglage de la figure 3 ;
[Fig.4a] et
[Fig.4b] représentent, suivant différentes vues, le module de réglage du système des figures précédentes ;
[Fig.5] représente en perspective éclatée l'ensemble bague / étrier du module de réglage des figures 4a et 4b ;
[Fig.6] représente en perspective vue de l'avant l'étrier du module de réglage des figures précédentes ;
[Fig.7] représente en perspective assemblée l'ensemble bague / étrier du module de réglage des figures 4a et 4b et 5.

On décrit ci-dessous un système de réglage en hauteur d'un accessoire d'un appareil sportif, ainsi qu'un appareil sportif comprenant un tel système pour le réglage en hauteur d'un accessoire.

En relation avec les figures, le système permet le réglage en hauteur d'une selle 1 de vélo. Selon d'autres applications, l'invention concerne d'autres types d'appareils sportifs, notamment de fitness, comprenant notamment un cadre capable de supporter le poids d'un utilisateur, l'accessoire à régler en hauteur pouvant être un guidon, un montant ou tout autres accessoires notamment d'appui de l'utilisateur sur l'appareil.

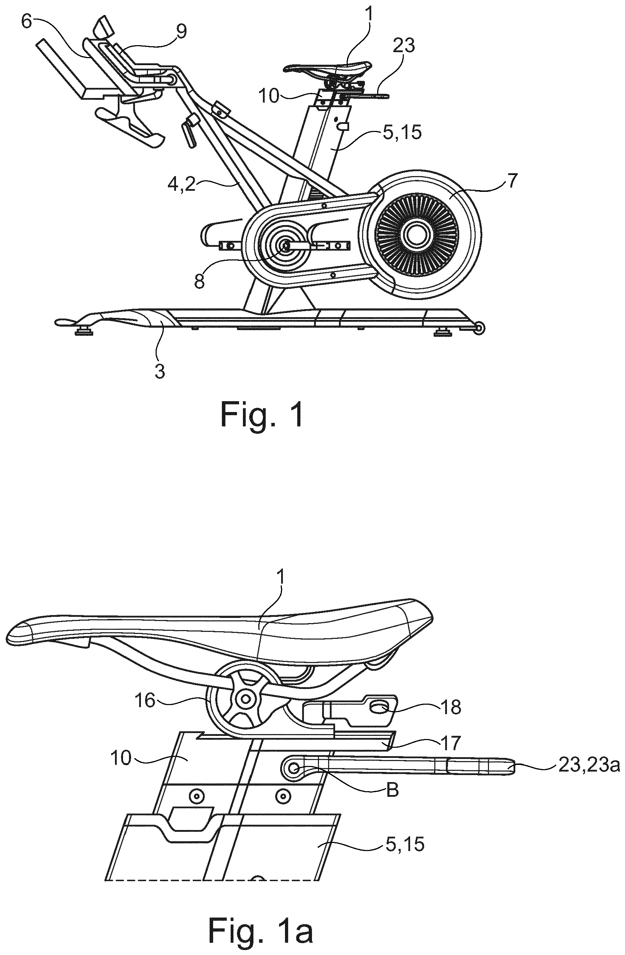

En relation avec la figure 1, le vélo est un vélo d'appartement, et comprend un cadre 2 qui présente un socle 3 destiné à venir en appui sur le sol, et sur lequel sont montés deux structures 4, 5, suivant des directions inclinées respectivement vers l'avant et l'arrière, la structure avant 4 portant un guidon 6 et la structure arrière 5 portant la selle 1 d'assise pour l'utilisateur.

Le vélo d'appartement comprend en outre :
- un dispositif 7 d'exercice physique, qui présente notamment un pédalier 8 qui est monté sur le cadre 2 au niveau d'une jonction entre les structures avant 4 de guidon et arrière 5 d'assise ;
- un écran d'affichage 9 monté en partie supérieure de la structure avant 4 de guidon, afin de permettre à l'utilisateur de visualiser des informations relatives à la pratique de son activité physique, par exemple sa cadence de pédalage.

La selle 1 est réglable en hauteur au moyen d'un système qui comprend un tube 10 présentant un conduit 11, ainsi qu'une tige 12 qui est disposée dans ledit conduit.

En particulier, la tige 12 comprend une extrémité inférieure qui est fixée au socle 3, et la selle 1 est associée en partie supérieure du tube 10, qui est monté coulissant autour de ladite tige pour permettre le réglage en hauteur de ladite selle.

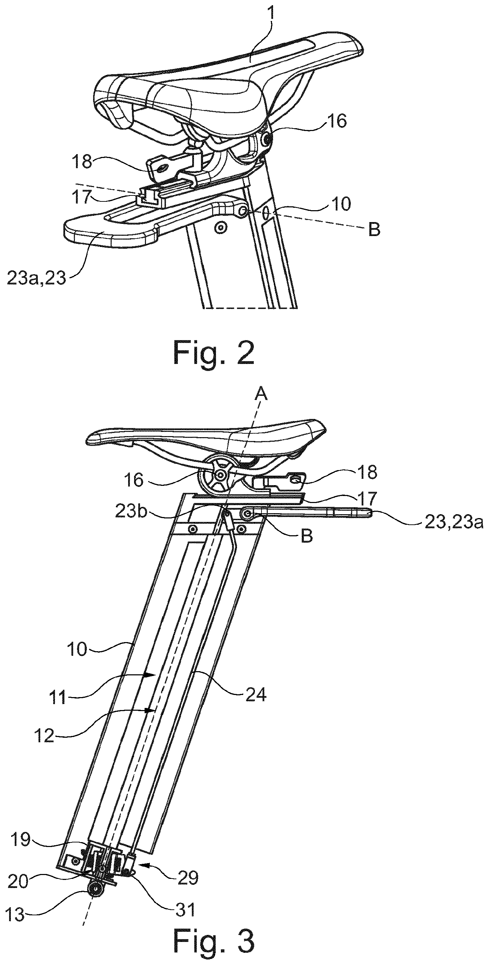

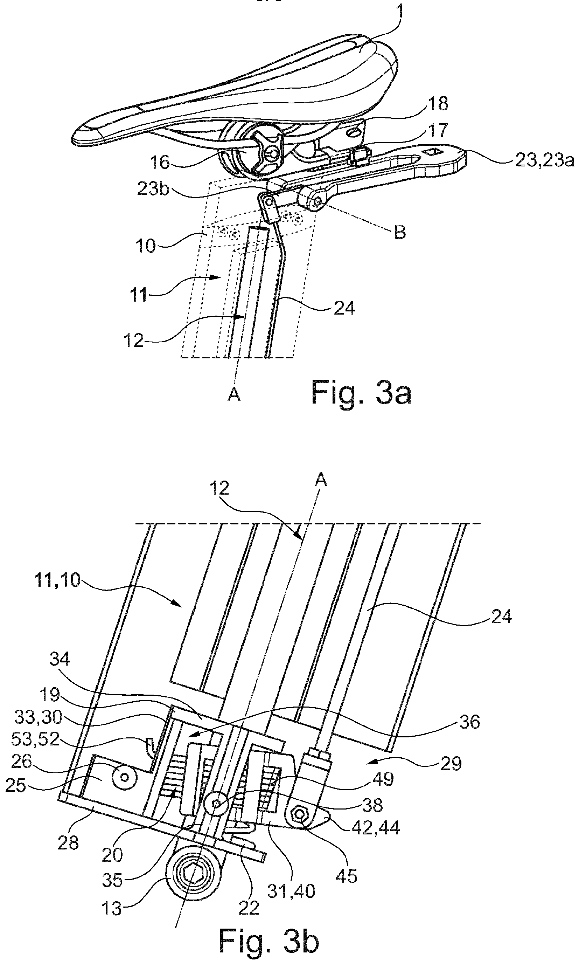

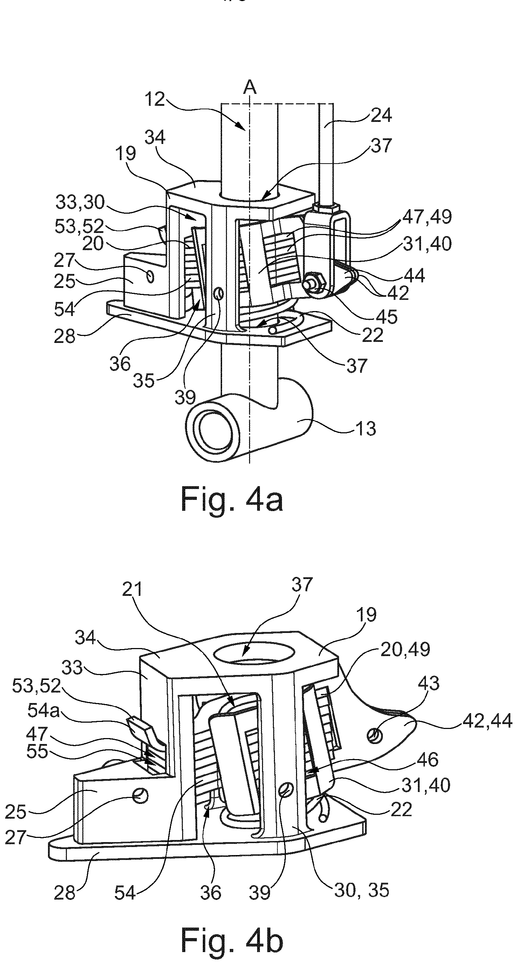

Pour ce faire, comme représenté sur les figures 3, 3b et 4a, l'extrémité inférieure de la tige 12 est équipée d'un manchon 13 qui est fixé sur le socle 3 du cadre 2, notamment au moyen d'une vis et d'un écrou (figures 3, 3b).

Par ailleurs, comme représenté sur la figure 1, la structure d'assise 5 est équipée d'un fourreau 15 dont l'extrémité inférieure est fixée au socle 2, notamment de manière à dissimuler le manchon 13 de fixation de la tige 12, et dans lequel ladite tige est disposée, le tube 10 étant monté en coulissement dans ledit fourreau.

Comme représenté notamment sur les figures 1a, 2 et 3a, le tube 10 est équipé d'un chariot 16 d'association de la selle 1, ledit chariot étant agencé pour permettre un réglage transversal de la selle 1 par rapport au tube 10, notamment suivant une direction sensiblement horizontale « avant - arrière » du vélo d'appartement.

Pour ce faire, l'extrémité supérieure du tube 10 est équipée d'un rail 17 sur lequel le chariot 16 portant la selle 1 est monté en coulissement selon la direction de réglage transversal mentionnée ci-dessus, ledit chariot étant équipé d'un dispositif de verrouillage en coulissement sur ledit rail, que l'utilisateur peut désactiver en actionnant une manette 18 prévue à cet effet à l'arrière dudit chariot, lorsqu'il souhaite changer le réglage transversal de la selle 1.

Le tube 10 est équipé d'un module 19 pour le réglage de sa hauteur, et donc de la hauteur de la selle 1, ledit module portant une bague 20 pourvue d'un orifice 21 dans lequel la tige 12 est disposée.

La bague 20 est montée en basculement dans le module 19 entre une position de coulissement, dans laquelle l'axe de l'orifice 21 est aligné avec l'axe A d'extension de la tige 12, afin de permettre un coulissement du tube 10 le long de ladite tige, et une position de blocage dudit coulissement par inclinaison de ladite bague, comme représenté sur les figures, la position de blocage étant contrainte par un moyen élastique 22 et la position de coulissement étant actionnée à l'encontre dudit moyen élastique.

En particulier, le module de réglage 19 et la bague 20 sont associés au tube 10, la bague 20 étant montée en coulissement sur la tige 12 sur une hauteur de réglage dudit tube le long de ladite tige.

Cet agencement permet d'effectuer un réglage très précis et fiable de la hauteur de la selle 1, et avec des gestes réduits pour l'utilisateur, qui peut notamment n'utiliser qu'une seule main pour réaliser successivement le basculement de la bague 20 vers sa position de coulissement le long de la tige 12, puis le déplacement en coulissement du tube 10 le long de ladite tige, et donc le réglage en hauteur de la selle 1 montée sur ledit tube.

Dans le mode de réalisation représenté, le conduit 11 du tube 10 s'étend entre la partie supérieure dudit tube, sur laquelle est montée la selle 1, et une partie inférieure équipée du module de réglage 19.

Le système de réglage comprend un organe 23 d'actionnement de la bague 20 en position de coulissement qui est associé au tube 10, notamment en étant disposé en partie supérieure dudit tube.

Comme représenté notamment sur les figures 1a, 2, 3 et 3a, l'organe d'actionnement comprend une palette 23 montée en rotation sur le tube 10 en étant reliée à la bague 20 par une tringle 24 de transmission de mouvement.

La palette 23 présente une partie 23a d'actionnement manuel et une partie 23b de transmission, disposées de part et d'autre d'un axe B de montage en rotation sur le tube 10, la tringle 24 étant associée à la partie de transmission 23b pour qu'un soulèvement de la palette 23 induise un abaissement de la bague 20 vers sa position de coulissement.

De façon avantageuse, la palette 23 est montée en rotation juste sous la selle 1 et s'étend dans le prolongement longitudinal arrière de ladite selle, afin de pouvoir être facilement localisée par l'utilisateur lorsqu'il souhaite régler la hauteur de ladite selle, mais également pour ne pas constituer un encombrement pour ledit utilisateur lorsqu'il s'assied sur ladite selle et actionne le pédalier 8 pour pratiquer une activité physique.

En relation avec la figure 3b, le module 19 est associé dans la partie inférieure du conduit 11. A cet effet, le module 19 comprend :
- au moins un plot 25 de géométrie complémentaire à la géométrie d'une portion du conduit 11, ledit plot étant disposé dans ladite portion en étant fixé au tube 10 par des moyens de fixation, notamment au moyen d'une vis 26 qui passe dans un alésage transversal 27 formé à cet effet dans ledit plot ;
- une paroi inférieure 28 de géométrie complémentaire à la géométrie d'au moins une portion de l'ouverture inférieure du conduit 11, ladite paroi étant disposée en regard de ladite portion d'ouverture pour l'occulter.

En particulier, le tube 10 présente un décroché arrière 29 d'accès au module 19, et notamment à la liaison pivot entre la tringle 24 et la bague 20.

Le module 19 comprend une cage 30 qui est montée dans l'extrémité inférieure du conduit 11, et dans laquelle un étrier 31 est monté en basculement, la bague 20 étant fixée dans ledit étrier.

Dans le mode de réalisation représenté, le module 19 comprend une seule pièce, notamment réalisée en matériau métallique, qui intègre la cage 30, le plot 25 de montage dans le conduit 11 et la paroi inférieure 28 d'occultation dudit conduit.

La cage 30 comprend une paroi avant 33 qui s'étend verticalement depuis une portion avant de la paroi inférieure 28, et sur l'avant de laquelle s'étend le plot 25 de fixation dans le conduit 11.

La cage 30 comprend également une paroi supérieure 34 qui est reliée à une partie arrière de la paroi inférieure 28 par deux bras latéraux 35 de ladite cage, les parois 28, 34 formant entre elles un logement 36 dans lequel la bague 20 est disposée, chacune desdites parois présentant un passage 37 dans lequel la tige 12 est disposée en coulissement.

Les bras latéraux 35 s'étendent verticalement de part et d'autre de la paroi inférieure 28, et sont disposés dans le conduit 11 en étant fixés au tube 10 par des moyens de fixation, par exemple par serrage de vis 38 dans des orifices transversaux 39 prévus à cet effet sur chacun desdits bras.

Comme représenté sur les figures 3b et 4a, le module de réglage 19 comprend un ressort 22 de contrainte de la bague 20 en position de blocage qui est interposé entre la cage 30 et ladite bague.

En particulier, le ressort de contrainte 22 présente une géométrie hélicoïdale dans laquelle la tige 12 est disposée en coulissement, ledit ressort étant disposé en contrainte entre la paroi inférieure 28 et la bague 20.

Par ailleurs, le logement 36 est agencé pour que la bague 20 en position de blocage - respectivement en position de coulissement - soit en butée contre la paroi supérieure 34 - respectivement contre la paroi inférieure 28. Sur les figures, la bague 20 est représentée en position de blocage, et vient donc en butée sous la paroi supérieure 34.

L'étrier 31 est formé de deux mors 40 qui sont associés en formant entre eux un logement 41 dans lequel la bague 20 est immobilisée.

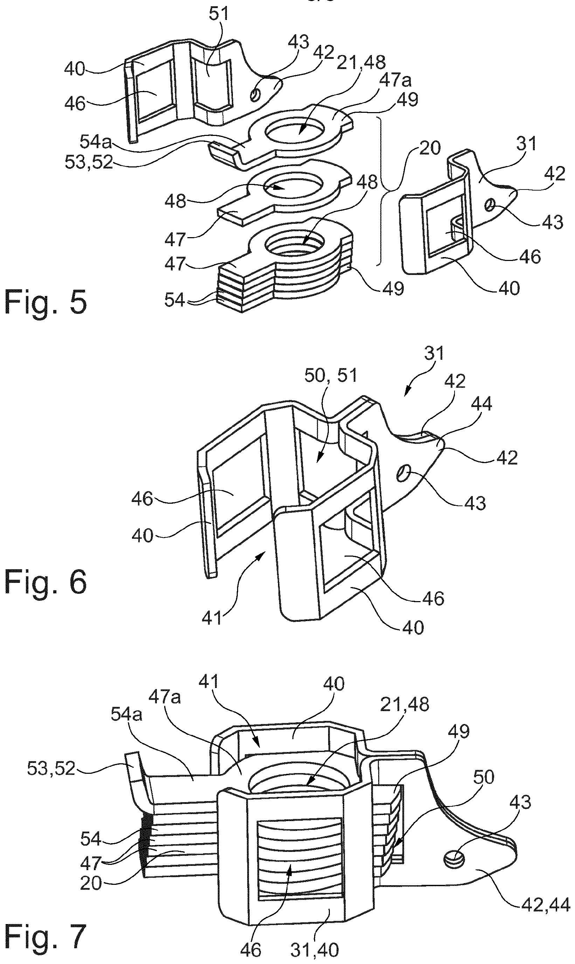

Comme représenté notamment sur les figures 5 à 7, les mors 40 sont formés avec des géométries identiques, notamment par découpe et emboutissage de tôles métalliques, et sont disposés symétriquement l'un par rapport à l'autre pour former le logement 41 de réception de la bague 20.

Chaque mors 41 présente une extension arrière 42 pourvue d'un orifice 43, lesdites extensions formant ensemble, par leur superposition, un crochet arrière 44 à laquelle la tringle 24 d'actionnement de la bague 20 est associée au moyen d'une vis 45 qui est serrée dans les orifices 43 alignés.

En outre, chaque mors 40 présente une fenêtre latérale 46 dans laquelle respectivement une partie latérale de la bague 20 est disposée en contact serrant, afin de solidariser ladite bague à l'étrier 31, et ainsi garantir le basculement de la bague 20 vers sa position de coulissement lorsque l'étrier 31 est actionné par la tringle 24.

Comme représenté sur les figures 3b à 7, la bague 20 est formée par la superposition de plusieurs rondelles 47, 47a présentant chacune un orifice 48 dans lequel la tige 20 est montée. En particulier, les rondelles 47, 47a sont agencées pour permettre, lors de leur empilage, la formation de l'orifice 21 de coulissement de la tige 12 par alignement de leurs orifices 48 respectifs.

De façon avantageuse, les rondelles 47, 47a sont réalisées en matériau métallique, notamment par découpe et emboutissage d'une tôle en acier, ce qui permet de faciliter la fabrication de la bague 20 tout en garantissant sa solidité.

Chacune des rondelles 47,47a présente une extension arrière 49 qui sont empilées les unes sur les autres en étant maintenues longitudinalement dans l'étrier 31. Pour ce faire, l'étrier 31 présente une fenêtre arrière 50 formée notamment à l'avant du crochet 44 de fixation de la tringle 24, et dans laquelle sont disposées les extensions arrière 49 des rondelles 47, 47a, la bague 20 étant ainsi calée longitudinalement dans son logement 41 entre les fenêtres latérales 46 et arrière 50.

En particulier, chaque mors 40 comprend un évidement 51 arrière agencé pour former, avec l'évidement 51 de l'autre mors 40, la fenêtre arrière 50 de réception des extensions 49 lors de l'assemblage de l'étrier 31.

En relation avec les figures 3b, 4b, 5 et 7, la bague 20 présente un coude 52 qui est monté en rotation dans la cage 30 pour induire le basculement de ladite bague entre ses positions de blocage et de coulissement.

De façon avantageuse, une rondelle supérieure 47a présente un repli 53 formant le coude 52, ce qui permet de faciliter la fabrication dudit coude, notamment par simple emboutissage de la rondelle 47a correspondante, l'empilement des autres rondelles 47 assurant la fiabilité du blocage conféré par contact entre les orifices 48a, 48 et la périphérie de la tige 12.

En particulier, chacune des rondelles 47, 47a présente une extension avant 54, 54a qui sont empilées les unes sur les autres, l'extrémité libre de l'extension 54a de la rondelle supérieure 47a étant repliée pour former le coude 52 de rotation de la bague 20.

Pour ce faire, la rondelle supérieure 47a peut être fabriquée avec une extension avant 54a de dimension longitudinale supérieure à celle des extensions avant 54 des autres rondelles 47, afin de disposer de suffisamment de longueur pour pouvoir former un coude de rotation 52 par pliage de ladite extension avant supérieure.

Comme représenté notamment sur la figure 4b, la cage 30 présente une fenêtre avant 55 dans laquelle le coude 52 est monté en rotation, ladite fenêtre avant étant formée dans la paroi avant 33 de ladite cage et au-dessus du plot 25 de fixation avant.

Dans le mode de réalisation représenté, la bague 20 est associée à la cage 30 uniquement par engagement de son coude avant 52 dans la fenêtre avant 55, et est notamment dissociée des bras latéraux 35 de ladite cage pour favoriser son basculement entre ses positions de blocage et de coulissement.

## Revendications

1. Système de réglage en hauteur d'un accessoire d'un appareil sportif, ledit système comprenant ledit accessoire, un tube (10) présentant un conduit (11) et une tige (12) disposée dans ledit conduit, ledit tube étant équipé d'un module (19) de réglage portant une bague (20) pourvue d'un orifice (21) dans lequel la tige (12) est disposée, ladite bague étant montée en basculement dans le module (19) entre une position de coulissement dans laquelle l'axe de l'orifice (21) est aligné avec l'axe (A) d'extension de la tige (12) et une position de blocage dudit coulissement par inclinaison de ladite bague, ladite position de blocage étant contrainte par un moyen élastique (22) et ladite position de coulissement étant actionnée à l'encontre dudit moyen élastique, ledit système de réglage étant **caractérisé en ce que** l'accessoire est associé sur le tube (10), la bague (20) étant montée en coulissement sur la tige (12) sur une hauteur de réglage dudit tube le long de la tige (12).

2. Système de réglage selon la revendication 1, **caractérisé en ce que** le conduit (11) s'étend entre une partie supérieure sur laquelle l'accessoire est monté et une partie inférieure équipée du module (19) de réglage.

3. Système de réglage selon l'une des revendications 1 ou 2, **caractérisé en ce qu'**il comprend un organe (23) d'actionnement de la bague (20) en position de coulissement, ledit organe étant associé au tube (10).

4. Système de réglage selon la revendication 3, **caractérisé en ce que** l'organe d'actionnement comprend une palette (23) montée en rotation sur le tube (10), ladite palette étant reliée à la bague (20) par une tringle (24) de transmission de mouvement.

5. Système de réglage selon l'une quelconque des revendications 1 à 4, **caractérisé en ce que** la bague (20) est formée par la superposition de plusieurs rondelles (47, 47a) présentant chacune un orifice (48) dans lequel la tige (12) est montée.

6. Système de réglage selon l'une quelconque des revendications 1 à 5, **caractérisé en ce que** le module (19) comprend une cage (30) dans laquelle un étrier (31) est monté en basculement, la bague (20) étant fixée dans ledit étrier.

7. Système de réglage selon la revendication 6, **caractérisé en ce que** l'étrier (31) présente un crochet arrière (44) d'association d'une tringle (24) d'actionnement de la bague (20) vers sa position de coulissement.

8. Système de réglage selon l'une des revendications 6 ou 7, **caractérisé en ce que** la bague (20) présente un coude (52) qui est monté en rotation dans la cage (30) pour induire le basculement de ladite bague entre ses positions de blocage et de coulissement.

9. Système de réglage selon la revendication 8 lorsqu'elle dépend de la revendication 5, **caractérisé en ce qu'**une rondelle supérieure (47a) présente un repli (53) formant le coude (52).

10. Système de réglage selon la revendication 9, **caractérisé en ce que** chacune des rondelles (47, 47a) présente une extension avant (54, 54a), lesdites extensions avant étant empilées les unes sur les autres, l'extrémité libre de l'extension (54a) de la rondelle supérieure (47a) étant repliée pour former le coude (52) de rotation.

11. Système de réglage selon l'une quelconque des revendications 6 à 10, **caractérisé en ce qu'**un ressort (22) de contrainte de la bague (20) en position de blocage est interposé entre la cage (30) et la bague (20).

12. Système de réglage selon l'une quelconque des revendications 6 à 11, **caractérisé en ce que** la cage (30) présente une paroi inférieure (28) et une paroi supérieure (34) formant entre elles un logement (36) dans lequel la bague (20) est disposée, chacune desdites parois présentant un passage (37) dans lequel la tige (12) est disposée en coulissement.

13. Système de réglage selon l'une quelconque des revendications 1 à 12, **caractérisé en ce que** le module (19) est associé dans le conduit (11) du tube (10).

14. Appareil sportif comprenant un système de réglage en hauteur d'un accessoire selon l'une quelconque des revendication 1 à 13, ledit appareil comprenant un cadre équipé d'un fourreau (15), la tige (12) étant disposée dans ledit fourreau en étant fixée audit cadre et le tube (10) étant monté en coulissement dans ledit fourreau.

15. Vélo comprenant un système de réglage en hauteur d'une selle (1) selon l'une quelconque des revendication 1 à 13, ledit vélo comprenant un cadre (2) équipé d'un fourreau (15), la tige (12) étant disposée dans ledit fourreau en étant fixée audit cadre et le tube (10) étant monté en coulissement dans ledit fourreau.
